# EUROPEAN PATENT APPLICATION

(11) **EP 4 701 319 A1**
(43) Date of publication of application: **25.02.2026**
(21) Application number: 24792661.1
(22) Date of filing: 16.04.2024
(51) Int. Cl.: H04W 74/0833, H04W 72/02, H04W 72/0446, H04W 72/23

(54) **TERMINAL AND COMMUNICATION METHOD**

(30) Priority: 19.04.2023 JP 2023068329
(71) Applicant: NTT DOCOMO, INC., Tokyo 100-6150 (JP)
(72) Inventor: OKANO, Mayuko, Tokyo 100-6150 (JP); KUMAGAI, Shinya, Tokyo 100-6150 (JP); HARADA, Hiroki, Tokyo 100-6150 (JP)
(74) Representative: Hoffmann Eitle
(86) International application number: PCT/JP2024/015106
(87) International publication number: WO 2024/219387

(57) **Abstract**

A terminal includes: a reception unit configured to receive a downlink shared channel that carries a random access response from a base station; a control unit configured to determine a resource of an uplink shared channel that carries an Msg3, based on a resource allocation of an uplink shared channel included in the random access response; and a transmission unit configured to transmit the uplink shared channel by using the determined resource of the uplink shared channel to the base station. The control unit reduces a peak rate and reduces a band related to random access.

## Description

### TECHNICAL FIELD

The present invention relates to a terminal and a communication method in a wireless communication system.

### BACKGROUND ART

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Literature 1).

In LTE or NR, there is definition of a UE category or a UE capability for the function-reduced IoT (Internet of Things) in which functions, such as functions related to transmission/reception bandwidth part or the number of antennas, to be supported as mandatory by normal terminals, are reduced. For example, in LTE, eMTC (enhanced Machine Type Communication), NB-IoT (Narrow Band IoT), etc., are defined, and in NR, RedCap (Reduced Capability), etc., are defined.

In addition, discussions related to a future system later than 5G, or 6G, have been started. In the future system, further improvement of communication performance and wider variety of use cases are expected.

### CITATION LIST

### Non-Patent Literature

Non-Patent Literature 1: 3GPP TS 38.300 V17.3.0 (2022-12)
Non-Patent Literature 2: 3GPP TS 38.213 V17.4.0 (2022-12)
Non-Patent Literature 3: 3GPP TS 38.214 V17.4.0 (2022-12)

### SUMMARY OF INVENTION

### TECHNICAL PROBLEM

In the future systems (for example, NR release 18 and 6G that is an NR successor system), an eRedCap (enhanced Reduced Capability) in which functions are further reduced as compared with RedCap that is discussed in NR release 17 is being discussed. For example, with respect to the eRedCap terminal, the baseband processing capability and/or the peak rate are/is restricted. Here, there is a possibility of failure of resource allocation for an eRedCap terminal due to the baseband processing capability restriction.

The present invention has been made in view of the above points, and it is an object of the present invention to properly allocate a resource for a capability reduced terminal in an wireless communication system.

### SOLUTION TO PROBLEM

According to the disclosed technique, a terminal is provided. The terminal includes: a reception unit configured to receive a downlink shared channel that carries a random access response from a base station; a control unit configured to determine a resource of an uplink shared channel that carries an Msg3, based on a resource allocation of an uplink shared channel included in the random access response; and a transmission unit configured to transmit the uplink shared channel by using the determined resource of the uplink shared channel to the base station. The control unit reduces a peak rate and reduces a band related to random access.

### ADVANTAGEOUS EFFECTS OF INVENTION

According to the disclosed technique, a resource can be properly allocated for the capability reduced terminal in the wireless communication system.

### BRIEF DESCRIPTION OF DRAWINGS

[Fig. 1] is a drawing illustrating an example of a configuration of a wireless communication system.
[Fig. 2] is a drawing illustrating an example of transmission and reception of RAR and Msg3.
[Fig. 3] is a flowchart for describing an example (1) of transmission and reception related to an embodiment of the present invention.
[Fig. 4] is a flowchart for describing an example (2) of transmission and reception related to an embodiment of the present invention.
[Fig. 5] is a drawing illustrating an example of a functional structure of a base station 10 related to an embodiment of the present invention.
[Fig. 6] is a drawing illustrating an example of a functional structure of a terminal 20 related to an embodiment of the present invention.
[Fig. 7] is a drawing illustrating an example of a hardware structure of the base station 10 or the terminal 20 related to an embodiment of the present invention.
[Fig. 8] is a drawing illustrating an example of a structure of a vehicle 2001 in an embodiment of the present invention.

### DESCRIPTION OF EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. It should be noted that, although the conventional techniques may be the conventional LTE, the conventional techniques are not limited to the conventional LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. In addition, the above-described terms in NR correspond to NR-SS, NR-PSS, NR-SSS, NR-PBCH, NR-PRACH, etc. However, even when a signal is used for NR, the signal is not required to be referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression that a radio parameter, or the like is "configured" may mean that a predetermined value is pre-configured, or may mean that a radio parameter indicated by a base station 10 or a terminal 20 is configured.

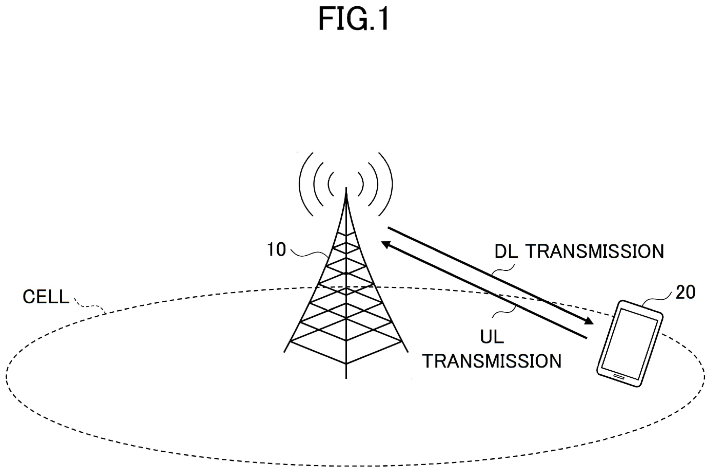

Fig. 1 is a drawing illustrating a configuration example (1) of a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example, but there may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. The base station 10 transmits a synchronization signal and system information to the terminal 20. The synchronization signal is, for example, an NR-PSS and/or an NR-SSS. The system information may be transmitted via an NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in Fig. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals.

The terminal 20 is capable of performing carrier aggregation in which a plurality of cells (a plurality of CCs (Component Carrier)) are bundled for performing communication with the base station 10. In the carrier aggregation, one PCell (Primary cell) and one or more SCells (Secondary cell) are used. In addition, PUCCH-SCell having PUCCH may be used.

First, the conventional RedCap of NR release 17 will be described. The maximum bandwidth that is supported by a RedCap UE and that is being discussed in NR Release 17 is 20 MHz in FR1 (Frequency Range 1) and 100 MHz in FR2 (Frequency Range 2). In addition, the RedCap UE is required to coexist with a non RedCap UE (hereinafter, also referred to as "non-RedCap UE") within the system.

In addition, a RedCap UE and a non-RedCap UE may be enabled to share the same initial DL-BWP (Downlink Bandwidth part) (including the subcarrier spacing, bandwidth, and position) configured by MIB (Master Information Block). On the other hand, an initial DL-BWP having a separate or added subcarrier spacing, bandwidth, and position for the RedCap UE may be configured.

The RedCap UE can share the initial DL-BWP for non-RedCap UE (hereinafter, also referred to as "DL-BWP#0") in a case where the maximum bandwidth supported by the RedCap UE is not exceeded.

In addition, according to the NR Release 17 technical specification, in a case of TDD, a DL-BWP and a UL-BWP with the same index must have the same center frequency in order to avoid the RF retuning.

In addition, a RedCap UE expects that an initial DL-BWP and an active DL-BWP are to be equal to or less than the maximum DL bandwidth supported by the RedCap UE after the (re)establishment of the dedicated RRC connection. The RedCap UE is provided with a DL-BWP by "initialDownlinkBWP" in "DownlinkConfigCommonRedCapSIB", and is provided with a UL-BWP by "initialUplinkBWP" in "DownlinkConfigCommonRedCapSIB". In a case where "initialUplinkBWP" in "UplinkConfigCommonSIB" indicates a UL-BWP that is larger than the maximum UL-BWP supported by the RedCap UE, the RedCap UE expects that a UL-BWP is to be provided by "initialUplinkBWP" in "UplinkConfigCommonRedCapSIB".

The RedCap UE may be provided with a DL-BWP by "BWP-DownlinkDedicated" other than with the initial DL-BWP. The RedCap UE may be provided with a UL-BWP that is equal to or less than the maximum UL bandwidth supported by the RedCap UE by "BWP-UplinkDedicated" other than the initial UL-BWP.

In a case where the RedCap UE is provided with "RACH-ConfigCommon-RedCap" or "RACH-ConfigCommonTwoStepRA-RedCap", the RedCap UE performs an initial access and random access procedure by using the corresponding parameters. Otherwise, the RedCap UE uses the corresponding parameters provided by "RACH-ConfigCommon" or "RACH-ConfigCommonTwoStepRA".

In a case where the RedCap UE is provided with "initialUplinkBWP" by "UplinkConfigCommonRedCapSIB" and there is no dedicated PUCCH resource configuration, the RedCap UE transmits PUCCH with HARQ-ACK information by using the PUCCH resource set provided by "pucch-ResourceCommonRedCap". It is to be noted that the PUCCH transmission is disabled in a case where "disable-FH-PUCCH" is provided by "PUCCH-ConfigCommonRedCap".

In a case of an initial DL-BWP that is provided by "initialDownlinkBWP" of "DownlinkConfigCommonRedCapSIB", when a RedCap UE monitors PDCCH according to the Type1-PDCCH CSS (Common search space) set without monitoring PDCCH according to the Type2-PDCCH CSS set, the RedCap UE recognizes that the initial DL-BWP does not include an SS/PBCH block or a CORESET (Control resource set) with index 0.

In a case where the RedCap UE monitors PDCCH according to the Type2-PDCCH CSS set, the RedCap UE assumes that the initial DL-BWP includes an SS/PBCH block and the CORESET with an index 0 if the RedCap UE has obtained SIB1 by using the SS/PBCH block and assumes that the initial DL-BWP includes an SS/PBCH block and does not include the CORESET with an index 0 if the initial DL-BWP does not include the SS/PBCH block that the RedCap UE has used to obtain SIB1.

In a case of an active DL-BWP provided by "BWP-DownlinkDedicated", the RedCap UE assumes that the active DL-BWP includes an SS/PBCH block and that the active DL-BWP does not include the CORESET with an index 0 except for a case of indicating a function of performing an operation using the DL-BWP without receiving an SS/PBCH block.

Next, discussions on the RedCap of NR release 18 will be described. In the NR Release 18, the eRedCap for further reducing the complexity of the RedCap UE for the NR Release 17 is being discussed. Hereinafter, the capability-reduced terminal for NR release 17 is referred to as a RedCap UE and the enhanced capability-reduced terminal for NR release 18 is referred to as an eRedCap UE in order to distinguish the two capability-reduced terminals. The RedCap UE is an example of the first capability reduced terminal. The eRedCap UE is an example of the second capability reduced terminal. In other words, the first capability reduced terminal is a terminal in which the first function is reduced and the second capability reduced terminal is a terminal in which the second function that is different from the first function (including a case in which the first function and the second function are partially overlapped) is reduced.

The impact on the network, co-existence of the RedCap UE or eRedCap UE with non-RedCap UE in a cell, impact on UE, impact on technical specifications, etc. are being discussed. The potential solutions, which may complement each other, for reducing the device complexity are focused on the following.

Reduction of the UE bandwidth in FR1 to 5 MHz is being discussed as the first solution. This solution may be combined with the relaxed UE processing timeline for PDSCH and/or PUSCH and/or CSI to be specified in the technical specifications.

The reduced UE peak data rate in FR1 is being discussed as the second solution. This solution may include the limited bandwidth for PDSCH and/or PUSCH, and may be combined with the relaxed UE processing timeline for PDSCH and/or PUSCH and/or CSI to be specified in the technical specifications.

It is to be noted that the following points are required to be taken into account with respect to the eRedCap UE. That is, the SSB that has been specified in the technical specifications of NR Release 15 is required to be reused so that the L1 changes are minimized. In addition, the BWP operations with/without SSB and with/without RF retuning are required to be discussed. Furthermore, it is not precluded that some solutions for FR1 can be applied to FR2. In addition, defining a single type of a Release 18 capability reduced terminal for further reducing the UE complexity is being discussed.

The eRedCap UE may be defined as described below.

For example, in the random access procedure, a terminal 20 that indicates that the terminal 20 itself is an eRedCap UE in at least one of the Msg1, Msg3, or MsgA may be defined to be an eRedCap UE. For example, an eRedCap UE may transmit Msg1 or MsgA by using a resource that is specified or configured for the eRedCap UE, and an eRedCap UE may indicate to be an eRedCap UE by using an indication field in Msg3 that is specified for the eRedCap UE.

For example, a terminal 20 that supports a specific UE capability may be defined as an eRedCap UE. The specific UE capability may be 1) to 7) described below, for example.
1) Capability of supporting up to 5 MHz bandwidth for PDSCH and PUSCH in FR1.
2) Capability of supporting the relaxed UE processing time for PDSCH, PUSCH, and/or CSI.
3) Capability of supporting the reduced UE peak data rate in FR1.
4) Capability of supporting one or two reception branches and the corresponding maximum number of DL-MIMO layers.
5) Capability of supporting FD (Full Duplex) - FDD or Type A HD (Half Duplex) - FDD in the FR1 FDD band.
6) Capability of supporting 64QAM (Quadrature amplitude modulation) or 256QAM in FR1.
7) Capability of not supporting carrier aggregation or dual connectivity.

In addition, a terminal 20 that reports to the base station 10 through the UE capability report that the terminal 20 supports a specific UE capability may be defined as an eRedCap UE. It is to be noted that the conventional terminal may mean a terminal other than the eRedCap UE.

As described above, with respect to the eRedCap UE, the baseband bandwidth for PDSCH reception or PUSCH transmission is limited to 5 MHz. In addition, with respect to the eRedCap UE, the RF bandwidth for UL and DL is 20 MHz. With respect to the physical channel and signal other than PDSCH or PUSCH, up to 20 MHz bandwidth BWP may be supported to be used. In addition, the eRedCap UE may support an additional early indication. In addition, the eRedCap UE may support 15 kHz SCS and 30 kHz SCS.

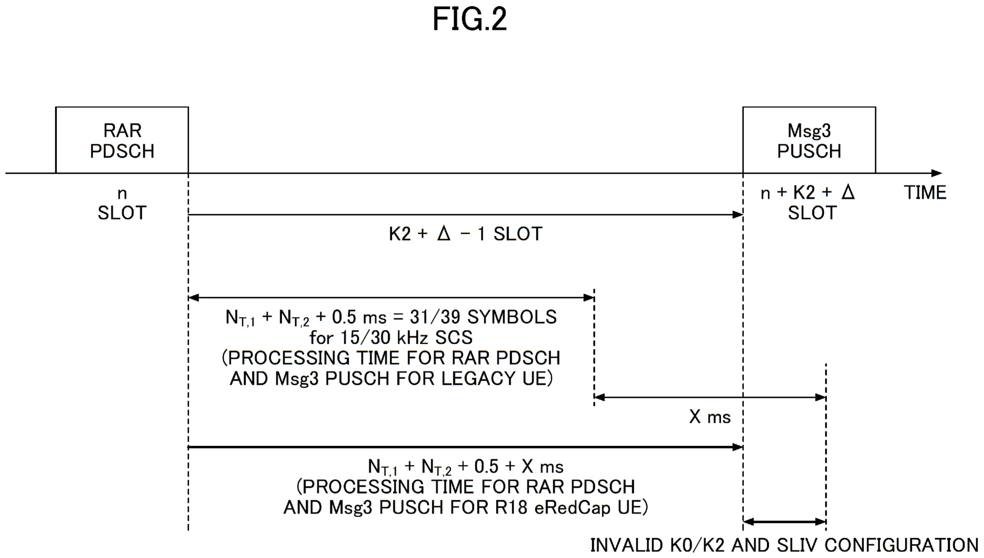

Fig. 2 is a drawing illustrating an example of transmission and reception of RAR and Msg3. As shown in Fig. 2, when gNB transmits RAR PDSCH (Random Access Response PDSCH) in slot n, Msg3 PUSCH is transmitted by UE in slot (n + K2 + Δ). Detailed description of K2 and Δ will be provided below.

As illustrated in Fig. 2, a time duration between the last symbol of RAR PDSCH (Random Access Response PDSCH) transmitted by the gNB and the first symbol of Msg3 PUSCH transmitted by the legacy UE is specified to be equal to or greater than N_{T,1} + N_{T,2} + 0.5 [ms] (refer to Non-Patent Literature 2). The time duration may be 31 symbols in a case of SCS 15 kHz and may be 39 symbols in a case of SCS 30 kHz.

In other words, the conventional terminal 20 that is not an eRedCap UE assumes that the minimum time between the last symbol of PDSCH and the first symbol of Msg3 PUSCH transmitted by the UE is to be N_{T,1} + N_{T,2} + 0.5 [ms]. It is to be noted that N_{T,1} corresponds to PDSCH reception processing time and N_{T,2} + corresponds to the PUSCH transmission preparation time.

In addition, as illustrated in Fig. 2, a processing time for RAR PDSCH and Msg3 PUSCH for the eRedCap terminal may be specified to be equal to or greater than N_{T,1} + N_{T,2} + 0.5 + X [ms]. The value of X may be {0.5, 0.25} [ms], may be {1, 0.5} [ms], or may be {2, 1} [ms] in a certain subcarrier spacing, for example.

Table 1 illustrates an example of a PUSCH TDRA (Time domain resource allocation) table (refer to Non-Patent Literature 3). Table 2 illustrates the definition of the value j in Table 1. Table 3 illustrates the definition of a parameter Δ used for determination of the above-described slot position.

**[Table 1]**

| Row index | PUSCH mapping type | K₂ | S | L |
|---|---|---|---|---|
| 1 | Type A | J | 0 | 14 |
| 2 | Type A | J | 0 | 12 |
| 3 | Type A | J | 0 | 10 |
| 4 | Type B | J | 2 | 10 |
| 5 | Type B | J | 4 | 10 |
| 6 | Type B | J | 4 | 8 |
| 7 | Type B | J | 4 | 6 |
| 8 | Type A | j+1 | 0 | 14 |
| 9 | Type A | j+1 | 0 | 12 |
| 10 | Type A | j+1 | 0 | 10 |
| 11 | Type A | j+2 | 0 | 14 |
| 12 | Type A | j+2 | 0 | 12 |
| 13 | Type A | j+2 | 0 | 10 |
| 14 | Type B | J | 8 | 6 |
| 15 | Type A | j+3 | 0 | 14 |
| 16 | Type A | j+3 | 0 | 10 |

**[Table 2]**

| H_{PUSCH} | J |
|---|---|
| 0 | 1 |
| 1 | 1 |
| 2 | 2 |
| 3 | 3 |
| 5 | 11 |
| 6 | 21 |

**[Table 3]**

| H_{PUSCH} | Δ |
|---|---|
| 0 | 2 |
| 1 | 3 |
| 2 | 4 |
| 3 | 6 |
| 5 | 24 |
| 6 | 48 |

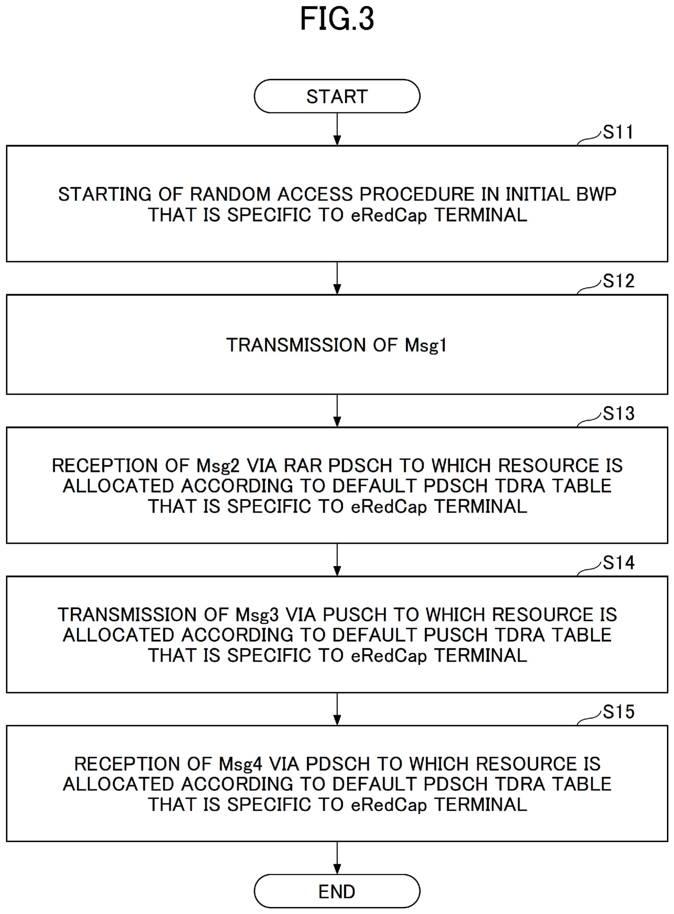

As illustrated in Table 1, the PUSCH mapping type, the delay time K₂, the start symbol S, and the number of symbols L are specified by the Row index. As illustrated in Fig. 2, the number of slots j is determined for each PUSCH numerology, that is, each subcarrier spacing. As illustrated in Fig. 3, the value of Δ is determined for each PUSCH numerology, that is, each subcarrier spacing. It is to be noted that, with respect to µ_{PUSCH}, 0 corresponds to 15 kHz, 1 corresponds to 30 kHz, 2 corresponds to 60 kHz, 3 corresponds to 120 kHz, 5 corresponds to 480 kHz, and 6 corresponds to 960 kHz.

Here, as illustrated in Fig. 2, in a case of an eRedCap terminal, some of the configurations of the default TDRA table that are referred to for the Msg3 PUSCH resource allocation in the conventional technical specification result in an invalid value for the eRedCap terminal depending on the values of K0, K2, and/or SLIV. Accordingly, there is a possibility that the default TDRA table for transmitting Msg3 PUSCH specific to the eRedCap terminal will be specified.

For example, the definition of the default PUSCH TDRA table and/or the definition of the value of j may be enhanced for the eRedCap UE. For example, the eRedCap UE may interpret the value of K₂ in the TDRA table illustrated in Table 2 and/or the value of j in a manner different from that of the conventional terminal. For example, the eRedCap UE may add X symbols or slots to the value of K₂, or may increase the value of j.

For example, a new default PUSCH TDRA table and/or a new definition of the value of j may be specified for the eRedCap UE, and the eRedCap UE may refer to the table and/or the definition.

For example, a plurality of PUSCH time resources may be allocated for the eRedCap UE, and the terminal may select an appropriate resource in accordance with the processing capability of the terminal itself and transmit Msg3 PUSCH. Table 4 is an example of a default PUSCH TDRA table in which a plurality of PUSCH time resources are allocated.

**[Table 4]**

| Row index | PUSCH mapping type | K₂ | S | L |
|---|---|---|---|---|
| 0 | Type A | Value #1, Value #2, ... | 0 | 14 |
| 1 | Type A | Value #1, Value #2, ... | 0 | 12 |
| 2 | Type A | Value #1, Value #2, ... | 0 | 10 |
| ⋮ | ⋮ | ⋮ | ⋮ | |

As illustrated in Table 4, a plurality of K₂'s such as the value #1, the value #2, ..., are specified for each Row index. The eRedCap UE may determine a resource to be used for transmitting Msg3 PUSCH by selecting an appropriate K₂ in accordance with the processing capability of the UE itself from among a plurality of K₂'s corresponding to the indicated Row index. The base station 10 may expect that Msg3 PUSCH is to be transmitted by using one of the plurality of PUSCH resources configured for the eRedCap UE.

Here, a terminal that supports both a function of reducing the baseband band and a function of reducing the peak rate, or a terminal that supports only a function of reducing the peak rate, may be defined as an eRedCap terminal. In addition, the initial access procedure is not required to be different between a terminal that supports both a function of reducing the baseband band and a function of reducing the peak rate and a terminal that supports only a function of reducing the peak rate.

A terminal that supports only a function of reducing the peak rate does not support a function related to the bandwidth reduction, and thus, the terminal cannot refer to the default TDRA table specific to the eRedCap terminal that can be newly specified for a terminal that supports both a function of reducing the baseband band and a function of reducing the peak rate. In other words, a terminal that supports only a function of reducing the peak rate refers to the conventional default TDRA table for the non-RedCap terminal.

In a case where a default TDRA table that is specific to the eRedCap terminal is specified, the base station performs TDRA for a terminal that supports both a function of reducing the baseband band and a function of reducing the peak rate, based on the default TDRA table that is specific to the eRedCap terminal. On the other hand, the base station needs to perform TDRA for a terminal that supports only a function of reducing the peak rate, based on the conventional default TDRA table.

The initial access procedure is the same between a terminal that supports both a function of reducing the baseband band and a function of reducing the peak rate and a terminal that supports only a function of reducing the peak rate, and thus, the base station cannot distinguish between the terminal that supports both a function of reducing the baseband band and a function of reducing the peak rate and the terminal that supports only a function of reducing the peak rate.

As described above, it is unclear which TDRA table is to be used for performing resource allocation for the eRedCap terminal, and thus, there is a risk that the understanding of the TDRA differs between the base station and the terminal.

Accordingly, an appropriate operation of Msg2 or MsgB PDSCH reception and Msg3 or MsgA PUSCH transmission may be performed as described in the following operation 1) and/or operation 2) while maintaining the flexibility of Msg3 or MsgA PUSCH resource allocation for the eRedCap terminal.
Operation 1) With respect to the eRedCap terminal, a terminal that supports only a function of reducing the peak rate may support at least one of functions related to the bandwidth reduction.

In the above-described operation 1), the default TDRA that is specific to the eRedCap terminal may be expected to be specified. In addition, the following 1) to 4) may be expected to be applied.
1) The default PUSCH TDRA table that is specific to the eRedCap terminal may be applied for the resource allocation for the PUSCH initial transmission or retransmission for Msg3 and/or MsgA, or may be applied for PUSCH for transmitting other information.
2) The default PUSCH and/or PDSCH TDRA table specific to the eRedCap terminal may be referred to only in a case where the PDSCH bandwidth of at least one of Msg2, MsgB, or fallback RAR exceeds 25 PRBs for 15 kHz SCS or exceeds 12 PRBs for 30 kHz SCS. In addition, the default PUSCH and/or PDSCH TDRA table specific to the eRedCap terminal may be referred to in a case where the PDSCH bandwidth of at least one of Msg2, MsgB, or fallback RAR does not exceed 25 PRBs for 15 kHz SCS or does not exceed 12 PRBs for 30 kHz SCS.
3) The default PDSCH TDRA table that is specific to the eRedCap terminal may be applied for the resource allocation for Msg2, Msg4, MsgB, or fallback RAR PDSCH, or may be applied for PDSCH for transmitting other information.
4) Which default TDRA table is to be used by the eRedCap terminal may be indicated by SIB1 or SIB other than SIB1, or may be specified in advance in the technical specification.

The function related to the bandwidth reduction supported by a terminal that supports only a function of reducing the peak rate may be a function related to the initial access and/or the random access.

Fig. 3 is a flowchart for describing an example (1) of transmission and reception related to an embodiment of the present invention. In step S11, a terminal 20 that supports only a function of reducing the peak rate starts the random access procedure in the initial BWP specific to the eRedCap terminal. In subsequent step S12, the terminal 20 transmits Msg1 to the base station 10.

In subsequent step S13, the terminal 20 receives, from the base station 10, Msg2 via RAR PDSCH to which a resource is allocated according to the default PDSCH TDRA table specific to the eRedCap terminal. In subsequent step S14, Msg3 is transmitted to the base station 10 via PUSCH to which a resource is allocated according to the default PUSCH TDRA table specific to the eRedCap terminal.

In subsequent step S15, the terminal 20 receives, from the base station 10, Msg4 via RAR PDSCH to which a resource is allocated according to the default PDSCH TDRA table specific to the eRedCap terminal.

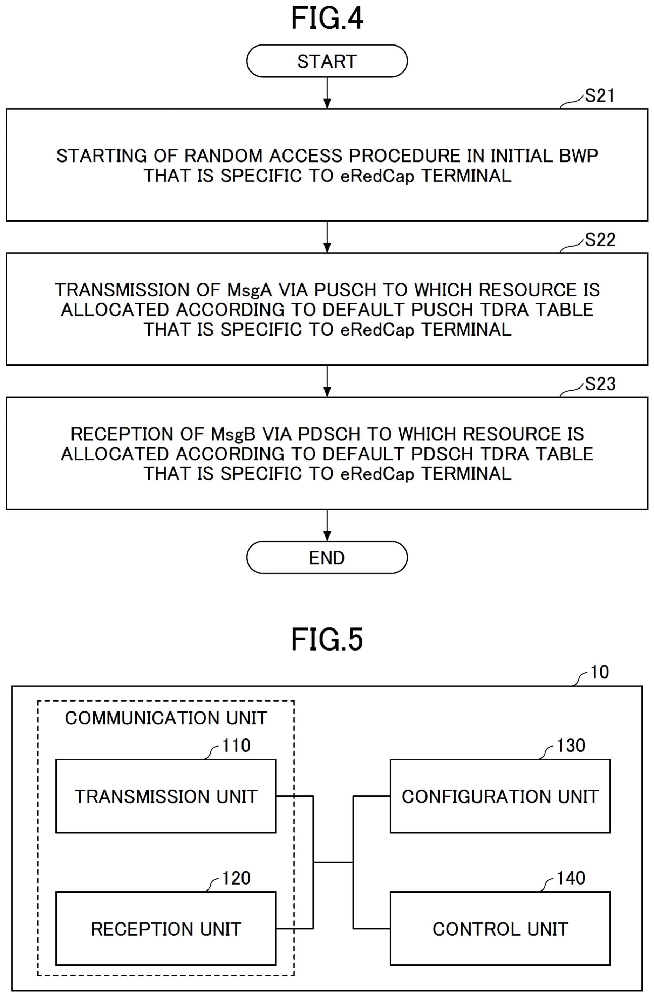

Fig. 4 is a flowchart for describing an example (2) of transmission and reception related to an embodiment of the present invention. In step S21, a terminal 20 that supports only a function of reducing the peak rate starts the random access procedure in the initial BWP specific to the eRedCap terminal.

In subsequent step S22, the terminal 20 transmits, to the base station 10, MsgA via PUSCH to which a resource is allocated according to the default PUSCH TDRA table specific to the eRedCap terminal.

In subsequent step S23, the terminal 20 receives, from the base station 10, MsgB via PDSCH to which a resource is allocated according to the default PDSCH TDRA table specific to the eRedCap terminal.

For example, as described above, the terminal 20 may support PUSCH resource allocation according to the default PUSCH TDRA table specific to the eRedCap terminal. The resource allocation may be applied to the Msg3 and/or MsgA PUSCH resource allocation, or may be applied to PUSCH for transmitting other information. Which default TDRA table is to be used may be indicated by SIB1 or SIB other than SIB1, or may be specified in advance in the technical specification.

For example, as described above, the terminal 20 may support PUSCH resource allocation according to the default PDSCH TDRA table specific to the eRedCap terminal. The resource allocation may be applied to the Msg2, Msg4, and/or MsgB PDSCH resource allocation, or may be applied to PDSCH for transmitting other information. Which default TDRA table is to be used may be indicated by SIB1 or SIB other than SIB1, or may be specified in advance in the technical specification.

For example, a terminal 20 that supports only a function of reducing the peak rate may expect that the restriction for the resource allocation of PUSCH or PUSCH for transmitting or receiving one of MSg2, Msg3, Msg4, MsgA, and MsgB is to be 1) to 4) described below.
1) In a case where the bandwidth of PDSCH of at least one of Msg2, MsgB, or fallback RAR exceeds 25 PRBs for 15 kHz SCS or exceeds 12 PRBs for 30 kHz SCS, the default TDRA table specific to the eRedCap terminal may be expected to be applied.
2) The PUSCH bandwidth for Msg3 and/or MsgA retransmission or initial transmission may be expected not to exceed 25 PRBs for 15 kHz SCS or not to exceed 12 PRBs for 30 kHz SCS.
3) The Msg4 PDSCH bandwidth may be expected not to exceed 25 PRBs for 15 kHz SCS or not to exceed 12 PRBs for 30 kHz SCS.
4) The MsgB PDSCH bandwidth may be expected not to exceed 25 PRBs for 15 kHz SCS or not to exceed 12 PRBs for 30 kHz SCS. In addition, in a case where the MsgB PDSCH bandwidth exceeds 25 PRBs for 15 kHz SCS or exceeds 12 PRBs for 30 kHz SCS, the enhanced or extended processing time is expected to be applied for the HARQ-ACK timing corresponding to MsgB PDSCH. The processing time may be, for example, N_{T,1} + X [ms].

For example, a terminal 20 that supports only a function of reducing the peak rate may perform an operation based on the processing time enhancement described in the following 1) to 5) in a case where the MSg2 or MsgB PDSCH resources exceed 25 PRBs for 15 kHz SCS or exceed 12 PRBs for 30 kHz SCS.
1) Enhancement of processing time between Msg2 PDSCH and Msg3 PUSCH. For example, the processing time may be N_{T,1} + N_{T,2} + 0.5 + X [ms].
2) Enhancement of processing time between the fallback RAR PDSCH from 2-step RACH to 4-step RACH and Msg3 PUSCH. For example, the processing time may be N_{T,1} + N_{T,2} + 0.5 + X [ms].
3) Enhancement of processing time between MsgB PDSCH and PUCCH for transmitting HARQ-ACK of MsgB PDSCH. For example, the processing time may be N_{T,1} + X [ms].
4) Enhancement of processing time between Msg2 PDSCH and PRACH retransmission. For example, the processing time may be N_{T,1} + 0.75 + X [ms].
5) Enhancement of processing time between MsgB and MsgA retransmission. For example, the processing time may be N_{T,1} + 0.75 + X [ms].

It is to be noted that the value of X may be different from each other in the above-described 1) to the above-described 5). It is to be noted that the value of X may be different between a terminal 20 that supports only peak rate reduction and a terminal that supports bandwidth reduction.

In addition, a terminal 20 that supports only peak rate reduction may support an operation in the initial BWP specific to the eRedCap terminal as described in the following 1) to 5).
1) The initial BWP in which an eRedCap terminal that supports only peak rate reduction performs an operation may be specified by technical specifications, or may be configured by SIB1, SIB other than SIB1, or RRC signaling.
2) In a case where both an initial BWP specific to the RedCap terminal and an initial BWP specific to the eRedCap terminal are configured, the eRedCap terminal that supports only peak rate reduction may perform an operation in the initial BWP specific to the RedCap terminal, or may perform an operation in the initial BWP specific to the eRedCap terminal.
3) In a case where an initial BWP specific to the RedCap terminal is configured and an initial BWP specific to the eRedCap terminal is not configured, the eRedCap terminal that supports only peak rate reduction may perform an operation in the initial BWP specific to the RedCap terminal.
4) In a case where an initial BWP specific to the eRedCap terminal is configured and an initial BWP specific to the RedCap terminal is not configured, the eRedCap terminal that supports only peak rate reduction may perform an operation in the initial BWP specific to the eRedCap terminal, or may perform an operation in the initial BWP that is the same as that of the non-RedCap terminal.
5) In a case where neither an initial BWP specific to the RedCap terminal nor an initial BWP specific to the eRedCap terminal is configured, the eRedCap terminal that supports only peak rate reduction may perform an operation in the initial BWP that is the same as that of the non-RedCap terminal.

In addition, whether the eRedCap terminal is a terminal that supports only peak rate reduction or a terminal that supports peak rate reduction and a function related to the bandwidth restriction may be enabled to be reported to the base station 10 via Msg1.

Different configurations related to PRACH transmission may be configured depending on whether the eRedCap terminal is a terminal that supports only peak rate reduction or a terminal that supports peak rate reduction and a function related to the bandwidth restriction. For example, configurations for the PRACH preamble and/or the RACH occasion may be different.

A terminal 20 that has reported to be a terminal that supports only peak rate reduction via Msg1 may perform an operation as described in the following 1) to 3).
1) With respect to at least one of Msg2 PDSCH, Msg4 PDSCH, MsgB PDSCH, Msg3 PUSCH, or MsgA PUSCH, the above-described terminal 20 may expect that the resources are to be allocated based on the conventional default TDRA table, or may expect that the resources are to be allocated based on the default TDRA table specific to the eRedCap terminal.
2) The above-described terminal 20 may support a case in which the resources of Msg3 PUSCH, Msg4 PDSCH, and MsgB PDSCH exceed 25 PRBs for 15 kHz SCS or exceed 12 PRBs for 30 kHz SCS, or is not required to expect a case of exceeding 25 PRBs for 15 kHz SCS or a case of exceeding 12 PRBs for 30 kHz SCS.
3) The above-described terminal 20 may perform an operation in the initial BWP that is the same as that of the RedCap terminal, or may perform an operation in the initial BWP that is the same as that of the eRedCap terminal.

According to an embodiment of the present invention, an appropriate operation of Msg2 or MsgB PDSCH reception and Msg3 or MsgA PUSCH transmission can be performed while maintaining the flexibility of Msg3 or MsgA PUSCH resource allocation for the eRedCap terminal.

In other words, a resource can be properly allocated for the capability reduced terminal in the wireless communication system.

### (Device configuration)

Next, a functional configuration example of the base station 10 and the terminal 20 for performing the processes and operations described above will be described. The base station 10 and the terminal 20 include functions for implementing the embodiments described above. It should be noted, however, that each of the base stations 10 and the terminal 20 may include only some of the functions in an embodiment.

### <Base station 10>

Fig. 5 is a drawing illustrating an example of a functional structure of a base station 10 according to an embodiment of the present invention. As shown in Fig. 5, the base station 10 includes a transmission unit 110, a reception unit 120, a configuration unit 130, and a control unit 140. The functional configuration illustrated in Fig. 5 is merely an example. Functional divisions and names of functional units may be anything as long as operations according to an embodiment of the present invention can be performed.

The transmission unit 110 includes a function for generating a signal to be transmitted to the terminal 20 side and transmitting the signal wirelessly. Further, the transmission unit 110 transmits an inter-network-node message to another network node. The reception unit 120 includes a function for receiving various signals transmitted from the terminal 20 and acquiring, for example, information of a higher layer from the received signals. In addition, the transmission unit 110 has a function of transmitting NR-PSS, NR-SSS, NR-PBCH, DL/UL control signals, and the like to the terminal 20. Further, the reception unit 120 receives an inter-network-node message from another network node.

The configuration unit 130 stores preset information and various configuration information items to be transmitted to the terminal 20. Contents of the configuration information are, for example, information related to the channel transmission and reception.

The control unit 140 performs control that enables functions described in an embodiment of the present invention. In addition, the control unit 140 performs control related to the channel transmission and reception as described in an embodiment of the present invention. The functional units related to signal transmission in the control unit 140 may be included in the transmission unit 110, and the functional units related to signal reception in the control unit 140 may be included in the reception unit 120.

### <Terminal 20>

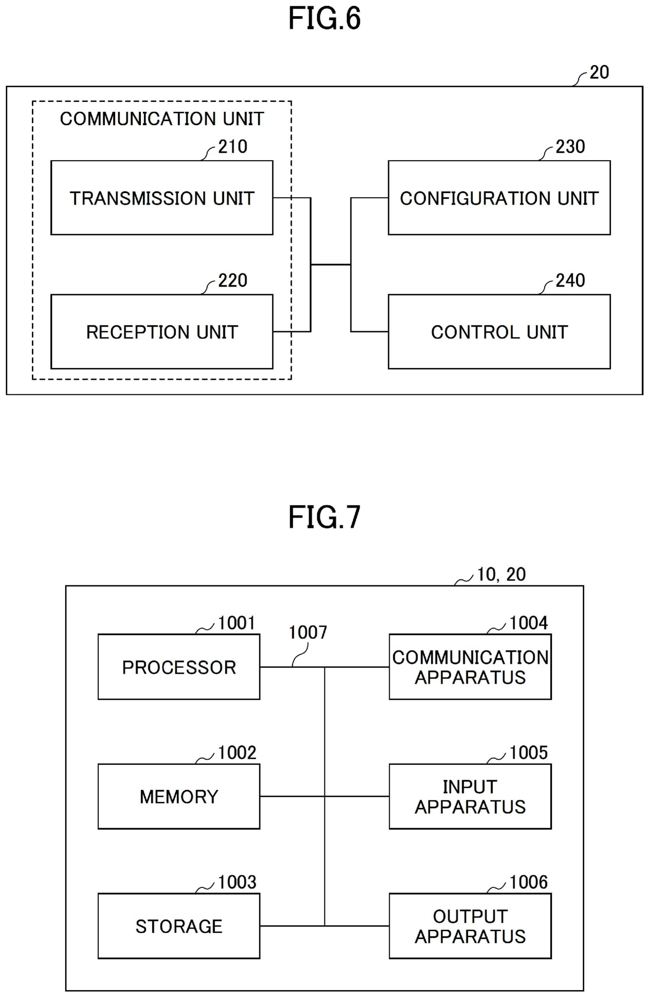

Fig. 6 is a drawing illustrating an example of a functional structure of a terminal 20 according to an embodiment of the present invention. As shown in Fig. 6, the terminal 20 includes a transmission unit 210, a reception unit 220, a configuration unit 230, and a control unit 240. The functional configuration illustrated in Fig. 6 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains higher layer signals from the received physical layer signals. In addition, the reception unit 220 has a function of receiving NR-PSS, NR-SSS, NR-PBCH, DL/UL/SL control signals, and the like, transmitted from the base station 10. In addition, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the another terminal 20, PSCCH, PSSCH, PSDCH, PSBCH, etc.

The configuration unit 230 stores various configuration information items received by the reception unit 220 from the base station 10. In addition, the configuration unit 230 also stores pre-configured configuration information. Contents of the configuration information are, for example, information related to the channel transmission and reception.

The control unit 240 performs control that enables functions described in an embodiment of the present invention. In addition, the control unit 240 performs control related to the channel transmission and reception as described in an embodiment of the present invention. The functional units related to signal transmission in the control unit 240 may be included in the transmission unit 210, and the functional units related to signal reception in the control unit 240 may be included in the reception unit 220.

### (Hardware structure)

The block diagrams that have been used to describe the above embodiments (Fig. 5 and Fig. 6) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, the functional block (component) to implement a function of transmission may be referred to as a transmitting unit or a transmitter. The method for implementing each component is not particularly limited as described above.

For example, the base station 10, the terminal 20, etc., according to an embodiment of the present disclosure may function as a computer for processing the radio communication method of the present disclosure. Fig. 7 is a diagram to show an example of a hardware structure of the base station 10 and the terminal 20 according to one embodiment. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 5 may be implemented by control programs that are stored in the memory 1002 and that operate on the processor 1001. In addition, for example, the control unit 240 of the terminal 20 illustrated in Fig. 6 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magnetooptical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that outputs something to the outside (e.g., display, speaker, LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

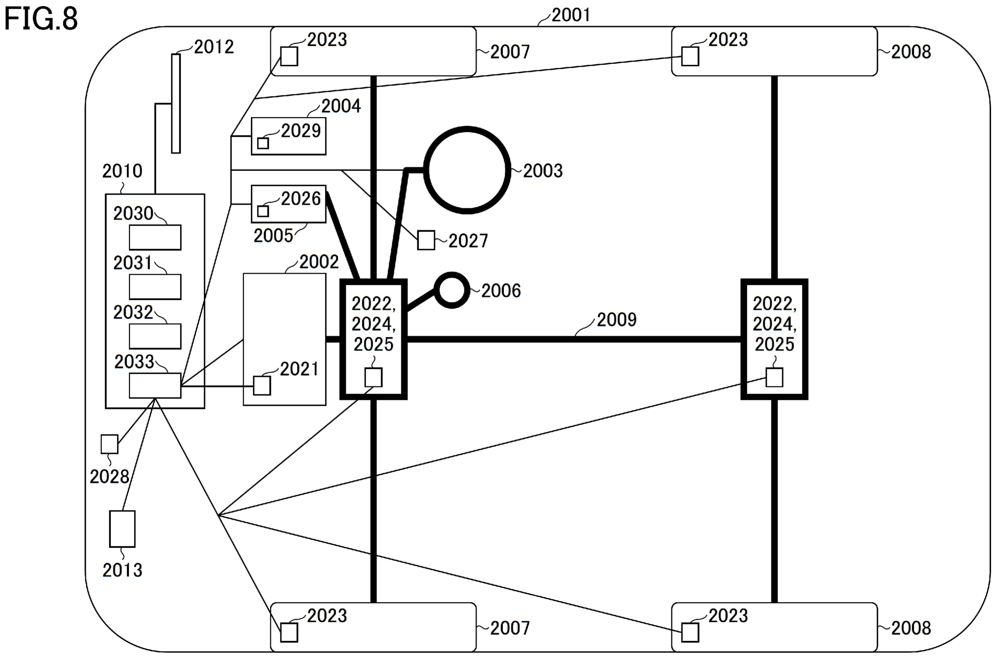

Fig. 8 shows an example of a configuration of a vehicle 2001. As shown in Fig. 8, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 that senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from a drive unit 2002, a steering unit 2003, an accelerator pedal 2004, a brake pedal 2005, a shift lever 2006, front wheels 2007, rear wheels 2008, an axle 2009, a microprocessor 2031 and a memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on an input from the outside (a user) obtained via the information service unit 2012, to the external apparatus via radio communication. The electronic control unit 2010, the various sensors 2021 to 2028, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display, a speaker, or the like, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

As described above, according to an embodiment of the present invention, a terminal is provided. The terminal includes: a reception unit configured to receive a downlink shared channel that carries a random access response from a base station; a control unit configured to determine a resource of an uplink shared channel that carries an Msg3, based on a resource allocation of an uplink shared channel included in the random access response; and a transmission unit configured to transmit the uplink shared channel by using the determined resource of the uplink shared channel to the base station. The control unit reduces a peak rate and reduces a band related to random access.

According to the above-described configuration, an appropriate operation of Msg2 or MsgB PDSCH reception and Msg3 or MsgA PUSCH transmission can be performed while maintaining the flexibility of Msg3 or MsgA PUSCH resource allocation for the eRedCap terminal. In other words, a resource can be properly allocated for the capability reduced terminal in the wireless communication system.

The control unit may determine the resource of the uplink shared channel, based on TDRA (Time domain resource allocation) that is specific to a capability reduced terminal. According to the above-described configuration, an appropriate operation of Msg2 or MsgB PDSCH reception and Msg3 or MsgA PUSCH transmission can be performed while maintaining the flexibility of Msg3 or MsgA PUSCH resource allocation for the eRedCap terminal.

The control unit may determine the resource of the downlink shared channel, based on TDRA (Time domain resource allocation) that is specific to a capability reduced terminal. According to the above-described configuration, an appropriate operation of Msg2 or MsgB PDSCH reception and Msg3 or MsgA PUSCH transmission can be performed while maintaining the flexibility of Msg3 or MsgA PUSCH resource allocation for the eRedCap terminal.

The control unit may apply the TDRA that is specific to the capability reduced terminal in a case where the downlink shared channel exceeds a certain number of PRBs (Physical resource blocks). According to the above-described configuration, an appropriate operation of Msg2 or MsgB PDSCH reception and Msg3 or MsgA PUSCH transmission can be performed while maintaining the flexibility of Msg3 or MsgA PUSCH resource allocation for the eRedCap terminal.

The control unit may extend processing time between the downlink shared channel and the uplink shared channel in a case where the downlink shared channel exceeds a certain number of PRBs. According to the above-described configuration, an appropriate operation of Msg2 or MsgB PDSCH reception and Msg3 or MsgA PUSCH transmission can be performed while maintaining the flexibility of Msg3 or MsgA PUSCH resource allocation for the eRedCap terminal.

In addition, according to an embodiment of the present invention, a communication method performed by a terminal is provided. The communication method includes: receiving a downlink shared channel that carries a random access response from a base station; determining a resource of an uplink shared channel that carries an Msg3, based on a resource allocation of an uplink shared channel included in the random access response; transmitting the uplink shared channel by using the determined resource of the uplink shared channel to the base station; and reducing a peak rate and reducing a band related to random access.

According to the above-described configuration, an appropriate operation of Msg2 or MsgB PDSCH reception and Msg3 or MsgA PUSCH transmission can be performed while maintaining the flexibility of Msg3 or MsgA PUSCH resource allocation for the eRedCap terminal. In other words, a resource can be properly allocated for the capability reduced terminal in the wireless communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described related to an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may each be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, notification of information may be implemented by using physical layer signaling (for example, downlink control information (DCI), uplink control information (UCI)), higher layer signaling (for example, radio resource control (RRC) signaling, medium access control (MAC) signaling), broadcast information (master information block (MIB), system information block (SIB)), and other signals or combinations thereof. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. In addition, a plurality of systems may be combined (for example, a combination of: at least one of LTE or LTE-A; and 5G, and the like) to be applied.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in the present disclosure may be implemented by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because various channels (e.g., PUCCH, PDCCH, or the like) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB) ", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station supports a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, terms such as "mobile station (MS)", "user terminal", "user equipment (UE)", "terminal", and the like, may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure in which communications between a base station and a user terminal is replaced with communications between a plurality of terminals 20 (for example, which may be referred to as Device-to-Device (D2D), Vehicle-to-Everything (V2X), and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) that does not depend on the numerology.

Numerology may be a communication parameter applied to at least one of transmission or reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, or the like.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as PDSCH (or PUSCH) mapping type A. A PDSCH (or PUSCH) transmitted using a mini-slot may be referred to as PDSCH (or PUSCH) mapping type B.

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in the conventional LTE, may be a period shorter than 1 ms (for example, 1 to 13 symbols), or may be a period longer than 1 ms. It is to be noted that the unit representing TTI may be referred to as a slot, a mini-slot, or the like, instead of a subframe.

Here, a TTI refers to the minimum time unit of scheduling in radio communication, for example. For example, in LTE systems, a base station performs, for each terminal 20, scheduling of allocating radio resources (such as a frequency bandwidth and transmission power that can be used by each terminal 20) in TTI units. It is to be noted that the definition of the TTI is not limited to the above-described definition.

The TTI may be a transmission time unit for channel-encoded data packets (transport blocks), code blocks, codewords, or the like, or may be a unit of processing in scheduling, link adaptation, or the like. It is to be noted that, when a TTI is provided, a time period (for example, the number of symbols) to which transport blocks, code blocks, codewords, or the like are actually mapped may be shorter than the TTI.

It is to be noted that, in a case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a normal TTI (TTI in LTE Rel. 8 to Rel. 12), a long TTI, a normal subframe, a long subframe, a slot, or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

It is to be noted that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and having a TTI length equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of the numerology, and may be 12, for example. The number of subcarriers included in an RB may be determined based on the numerology.

In addition, an RB may include one or a plurality of symbols in the time domain, and may have a length of one slot, one mini-slot, one subframe, or one TTI. One TTI, one subframe, and the like, may each be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (Res). For example, one RE may correspond to a radio resource area including one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be identified by an RB index based on the common reference point of the carrier. PRBs may be defined by a certain BWP and may be numbered in the BWP.

A BWP may include a BWP for UL (UL BWP) and a BWP for DL (DL BWP). One or a plurality of BWPs may be configured in one carrier for UE.

At least one of configured BWPs may be active, and the UE is not required to expect to transmit/receive a certain signal/channel outside the active BWP. It is to be noted that that a "cell", a "carrier", or the like, in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

The present international patent application is based on and claims priority to Japanese patent application No. 2023-068329 filed on April 19, 2023, the entire contents of which are hereby incorporated herein by reference.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
30 Core network
1001 Processor
1002 Memory
1003 Storage
1004 Communication apparatus
1005 Input apparatus
1006 Output apparatus
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A terminal comprising:
a reception unit configured to receive a downlink shared channel that carries a random access response from a base station;
a control unit configured to determine a resource of an uplink shared channel that carries an Msg3, based on a resource allocation of an uplink shared channel included in the random access response; and
a transmission unit configured to transmit the uplink shared channel by using the determined resource of the uplink shared channel to the base station, wherein
the control unit reduces a peak rate and reduces a band related to random access.

2. The terminal as claimed in claim 1, wherein
the control unit determines the resource of the uplink shared channel, based on TDRA (Time domain resource allocation) that is specific to a capability reduced terminal.

3. The terminal as claimed in claim 1, wherein
the control unit determines the resource of the uplink shared channel, based on TDRA (Time domain resource allocation) that is specific to a capability reduced terminal.

4. The terminal as claimed in claim 3, wherein
the control unit applies the TDRA that is specific to the capability reduced terminal in a case where the downlink shared channel exceeds a certain number of PRBs (Physical resource blocks).

5. The terminal as claimed in claim 1, wherein
the control unit extends processing time between the downlink shared channel and the uplink shared channel in a case where the downlink shared channel exceeds a certain number of PRBs.

6. A communication method performed by a terminal, the communication method comprising:
receiving a downlink shared channel that carries a random access response from a base station;
determining a resource of an uplink shared channel that carries an Msg3, based on a resource allocation of an uplink shared channel included in the random access response;
transmitting the uplink shared channel by using the determined resource of the uplink shared channel to the base station; and
reducing a peak rate and reducing a band related to random access.
